# EUROPEAN PATENT APPLICATION

(11) **EP 4 783 130 A1**
(43) Date of publication of application: **29.07.2026**
(21) Application number: 26154286.4
(22) Date of filing: 27.01.2026
(51) Int. Cl.: G06V 20/69, G06T 7/00

(54) **CELL RECOGNITION APPARATUS**

(30) Priority: 28.01.2025 JP 2025012185
(71) Applicant: Yamaha Hatsudoki Kabushiki Kaisha, Iwata-shi, Shizuoka 438-8501 (JP)
(72) Inventor: SHIBUYA, Satoshi, Shizuoka, 4388501 (JP)
(74) Representative: Müller-Boré & Partner Patentanwälte PartG mbB

(57) **Abstract**

A cell recognition apparatus includes: a cell containing portion capable of containing a cell; an imaging unit configured to image the cell containing portion; and a recognition processing unit configured to recognize a cell in the cell containing portion based on an image acquired by the imaging unit. The recognition processing unit performs processing of assigning a first identification code for recognizing a whole cell contained in the cell containing portion, a second identification code for recognizing a cell element included in the whole cell, and cooperation information that associates the first identification code with the second identification code.

## Description

### FIELD OF INVENTION

The present invention relates to a cell recognition apparatus that recognizes a cell based on an image obtained by imaging a cell contained in a cell containing portion.

### BACKGROUND ART

For example, in a cell pickup apparatus, a target cell selected as a picking target among cells contained in a cell containing portion is sucked with a suction tip. At the time of picking, the cell containing portion is imaged, an obtained image is subjected to predetermined image processing to perform image recognition of cells, and a cell matching a condition is specified as a target cell. Conventionally, a target cell is identified by evaluating a feature amount exclusively obtained from contour information of a cell obtained from an image. Japanese Patent Application Laid-Open No. 2024-116129 discloses a cell selection apparatus that evaluates a shape, a size, a fluorescence pattern, fluorescence color distribution, and the like of a cell or a nucleus as a feature amount.

There has been a case where it is not possible to perform analysis of a cell with high information density only by evaluating a feature amount obtained from contour information or fluorescence information of the entire cell contained in the cell containing portion.

### SUMMARY OF THE INVENTION

An object of the present invention is to provide a cell recognition apparatus that enables analysis of a cell with high information density.

A cell recognition apparatus according to one aspect of the present invention includes: a cell containing portion capable of containing a cell; an imaging unit configured to image the cell containing portion; and a recognition processing unit configured to recognize a cell in the cell containing portion based on an image acquired by the imaging unit, and the recognition processing unit performs processing of assigning a first identification code for recognizing a whole cell contained in the cell containing portion, a second identification code for recognizing a cell element included in the whole cell, and cooperation information that associates the first identification code with the second identification code.

### BRIEF DESCRIPTION OF THE DRAWINGS

Fig. 1 is a block diagram illustrating a configuration of a cell picking apparatus to which a cell recognition apparatus according to the present invention is applied;
Fig. 2A is a perspective view of a well plate which is an example of a cell containing portion, Fig. 2B is a plan view of one well, and Fig. 2C is a cross-sectional view of a grid;
Fig. 3 is a diagram illustrating an example of a plate image including a plurality of grid images;
Fig. 4 is a diagram illustrating a relationship between a captured cell image and a data hierarchy;
Fig. 5 is a diagram illustrating recognition processing for a cell in one grid;
Fig. 6 is a diagram in a tabular form illustrating an example of a cell list created for each class;
Fig. 7 is a diagram illustrating a display example of cell information on a monitor;
Fig. 8 is a diagram illustrating another display example of cell information on the monitor; and
Fig. 9 is a flowchart illustrating an example of processing of assigning cooperation information to a cell in a grid.

### DETAILED DESCRIPTION

Hereinafter, an embodiment of the present invention will be described in detail with reference to the drawings. A cell recognition apparatus according to the present invention is an apparatus that captures an image of a well plate or a culture vessel that contains various cells derived from a living organism and recognizes a cell based on an obtained image. Examples of the biologically derived cells include single cells such as a blood cell, a dissociated cell, and a fertilized egg, a circulating tumor cell, small tissue pieces such as histoculture, cell aggregates such as a spheroid and an organoid, organisms such as a zebrafish and a nematode, and a 2D or 3D cell colony. In the present specification, the term "cell" includes these various cells. One of preferable applications of the cell recognition apparatus of the present invention is a cell picking apparatus. For example, the cell recognition apparatus can be used to identify a cell to be picked from among cells contained in a well plate. In addition, the cell recognition apparatus of the present invention can also be applied to a cell observation apparatus, a cell culture apparatus, and the like. In the following embodiment, an example in which the cell recognition apparatus of the present invention is applied to a cell picking apparatus will be described.

### [Configuration of cell picking apparatus]

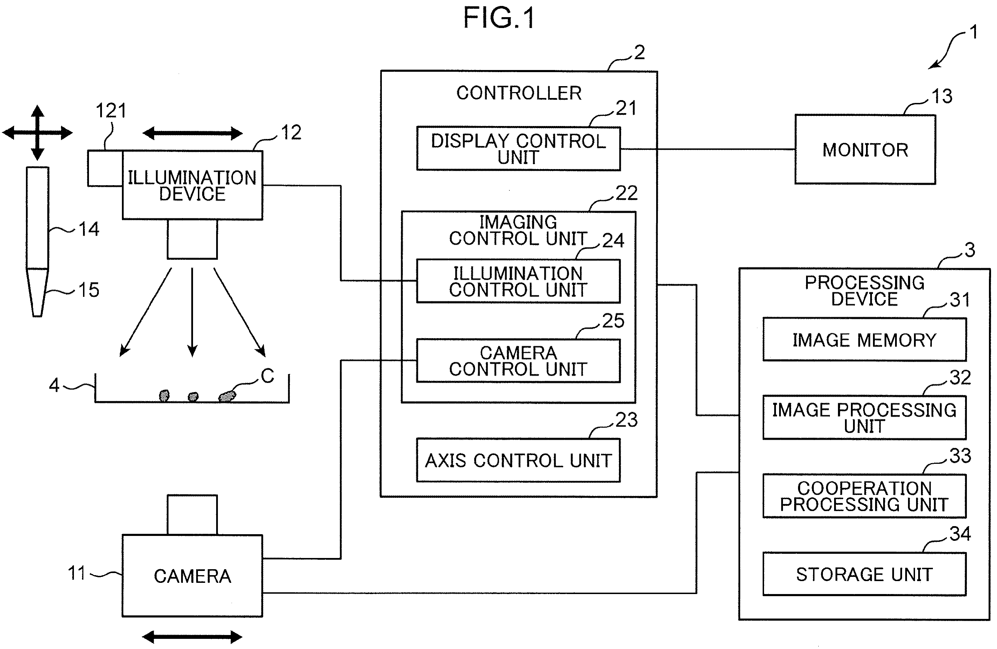

Fig. 1 is a block diagram illustrating a configuration of a cell picking apparatus 1 according to the present embodiment. The cell picking apparatus 1 includes a camera 11 (imaging unit), an illumination device 12 (illumination unit), a monitor 13 (display unit), a head 14, a controller 2, and a processing device 3 (recognition processing unit). The cell picking apparatus 1 is an apparatus for picking a cell C contained in a well plate 4 (cell containing portion) and transferring the cell C to another container or another apparatus.

The camera 11 is disposed below the well plate 4 and captures an image of the cell C held on a bottom surface of the well plate 4. In other words, a bottom surface of the well plate 4 containing the cell C is imaged. Note that a member made from a translucent resin material or glass is used as the well plate 4 so that imaging from below by the camera 11 can be performed. The camera 11 includes an objective lens for an optical microscope and an imaging element such as a CMOS sensor. The camera 11 is movable in a direction (XY direction) parallel to a bottom surface of the well plate 4.

The illumination device 12 is disposed above the well plate 4, and irradiates the cell C with illumination light when the cell C is imaged by the camera 11. The illumination device 12 can irradiate the well plate 4 with a plurality of types of illumination light. A plurality of types of the illumination light are, for example, visible illumination light for bright field imaging of the cell C, diffracted light for phase contrast observation, and the like. The illumination device 12 includes an excitation light source 121 that emits visible light to ultraviolet light for fluorescence observation. The cell C is irradiated with excitation light emitted from the excitation light source 121 as coaxial light by using an optical fiber and a beam splitter. The illumination device 12 is also movable in the XY directions above the well plate 4.

The monitor 13 displays various types of information necessary for operation of the cell picking apparatus 1. In the present embodiment, information regarding a target cell to be picked and information regarding various cells necessary for recognizing a target cell are displayed on the monitor 13. The information includes cooperation information indicating a parent-child relationship, a sibling relationship, or the like of the cell C. The parent-child relationship is, for example, a relationship between one cell and an internal element such as a cell nucleus contained in the cell. The sibling relationship is, for example, a relationship between a certain cell and a co-cultured heterotypic cell. The cooperation information is association information for enabling tracing of the relationship.

The head 14 is disposed above the well plate 4, picks the cell C from the well plate 4, and transfers the cell C to a predetermined transfer destination. A tip 15 for sucking and discharging the cell C is attached to an end of the head 14. The head 14 is movable in the XY directions and a direction (Z direction) of approaching and retracting from the well plate 4. The tip 15 has an opening at a tapered end. At the time of picking of the cell C, the head 14 is moved so that an end opening of the tip 15 faces the target cell C from above. After the above, by generating negative pressure in the end opening, the target cell C is sucked into the tip 15.

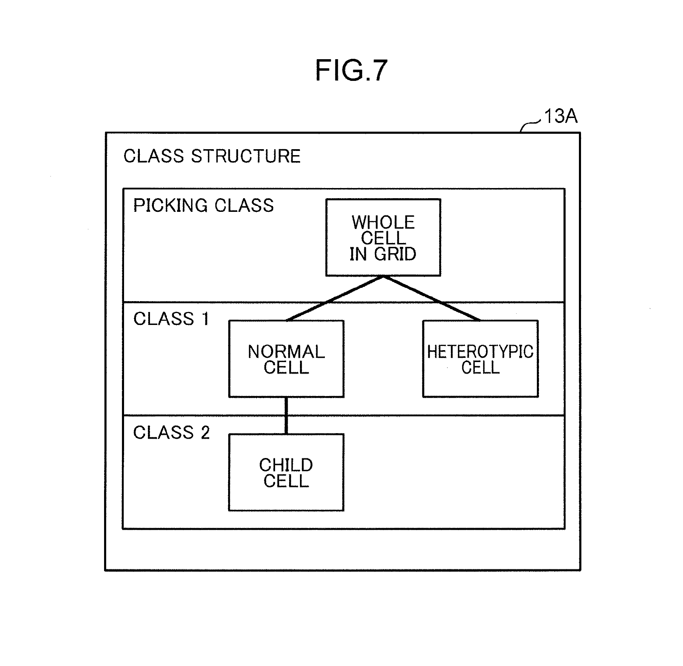

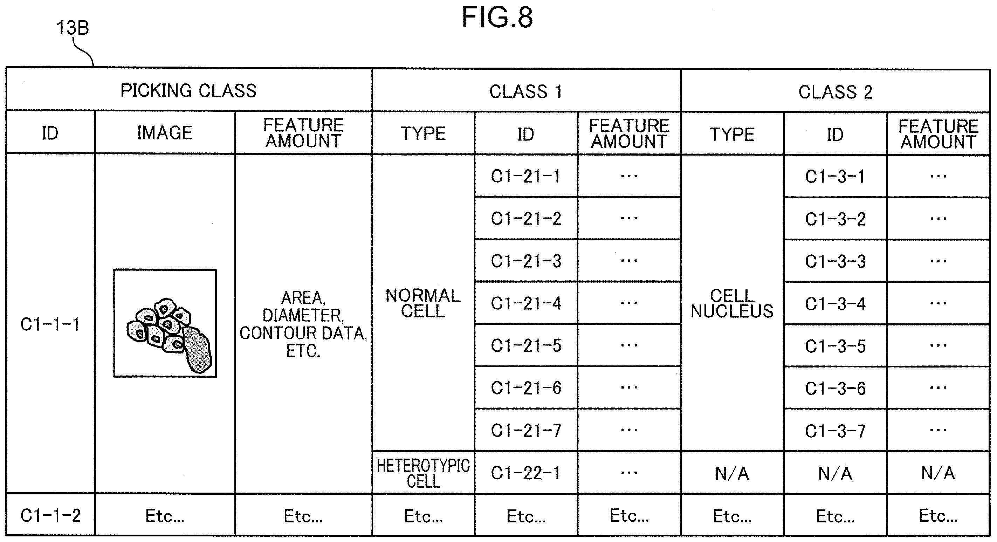

The controller 2 includes a processor and the like, and integrally controls an operation of each unit of the cell picking apparatus 1. The controller 2 operates to functionally include a display control unit 21, an imaging control unit 22, and an axis control unit 23 by reading a predetermined program. The display control unit 21 controls a display operation on the monitor 13. In the present embodiment, the display control unit 21 controls a display operation of various types of cell information based on a processing result of the processing device 3. A specific example of the display operation will be described with reference to Figs. 7 and 8.

The imaging control unit 22 controls operations of bright field imaging and fluorescence imaging of the cell C in the well plate 4. The imaging control unit 22 includes an illumination control unit 24 and a camera control unit 25. The illumination control unit 24 controls an operation of the illumination device 12 including the excitation light source 121. Specifically, the illumination control unit 24 controls selection of illumination light emitted from the illumination device 12, a lighting timing of illumination light, and the like. The camera control unit 25 controls an operation of the camera 11. Specifically, the camera control unit 25 controls an exposure amount, a shutter timing, a focusing operation, and the like of the camera 11. The imaging control unit 22 of the present embodiment can cause the camera 11 and the illumination device 12 to execute bright field imaging of the cell C and fluorescence imaging for causing the target cell C to fluoresce.

The axis control unit 23 controls movement operations of the camera 11, the illumination device 12, and the head 14. The axis control unit 23 moves the camera 11 and the illumination device 12 to predetermined positions by controlling a drive motor for XY axis movement of the camera 11 and the illumination device 12. Further, the axis control unit 23 controls a drive motor for XY axis movement and a drive motor for Z axis movement of the head 14 to cause the head 14 equipped with the tip 15 to execute a picking operation of the cell C.

The processing device 3 executes processing of recognizing the cell C in the well plate 4, processing of assigning cooperation information for association between a plurality of the recognized cells C, and the like based on an image acquired by the camera 11. The processing device 3 includes an image memory 31, an image processing unit 32, a cooperation processing unit 33, and a storage unit 34.

The image memory 31 is a memory region that temporarily stores image data captured by the camera 11. The image processing unit 32 performs image processing such as edge detection processing and pattern recognition processing accompanied by feature amount extraction on image data stored in the image memory 31. By this image processing, recognition of a whole cell contained in a containing unit (grid 42 described later) of the well plate 4, recognition of a cell element constituting a whole cell, and the like are performed.

The cooperation processing unit 33 performs processing of assigning information indicating connection of various cells recognized by image processing of the image processing unit 32. For example, the cooperation processing unit 33 performs processing of assigning a unique identification code to each of recognized cells and processing of assigning cooperation information for associating the identification codes with each other. The storage unit 34 stores a database including the identification code, the cooperation information, a feature amount of each cell, and the like, image information of a cell, and the like. The display control unit 21 of the controller 2 appropriately reads data from the storage unit 34 and causes the monitor 13 to display required cell information.

### [Example of cell containing portion]

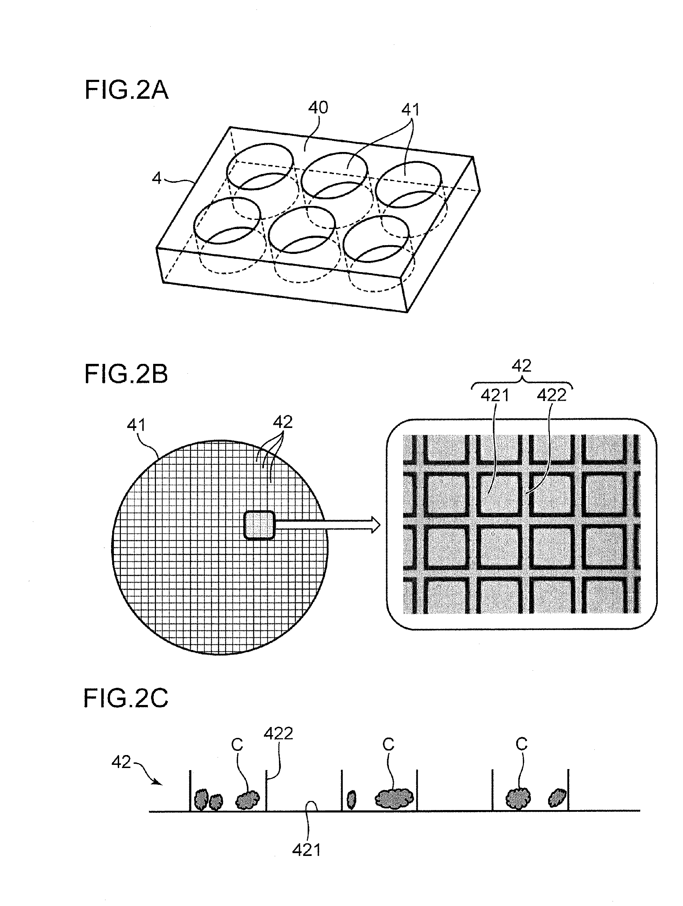

The well plate 4 as a cell containing portion is a container capable of containing the cell C dispensed from a dispenser or the like. Fig. 2A is a perspective view illustrating an example of the well plate 4. The well plate 4 includes a plate-like plate body 40 and a plurality of wells 41. The well 41 is a cylindrical bottomed hole formed in the plate body 40. Fig. 2A illustrates the well plate 4 in which the wells 41 arranged in two rows and three columns are provided in the plate body 40. Note that the well 41 is not limited to a cylindrical shape, and may have a cross-sectional shape of a square or other shapes.

Fig. 2B is a plan view of one of the wells 41. A large number of grids 42 are arranged on a bottom surface of the well 41. The grid 42 is formed by a square bottom surface 421 and a partition wall 422 surrounding a periphery of the bottom surface 421. In Fig. 2B, the grids 42 arranged in a lattice shape are illustrated. The grid 42 may have another shape, for example, a circular shape, a rectangular shape, or a honeycomb shape. A bottom surface of the well 41 may be a plane where the grid 42 does not exist. Further, the bottom surface 421 of the grid 42 may be a flat surface, a recessed curved surface, or the like.

Fig. 2C is a longitudinal cross-sectional view of the grid 42. The bottom surface 421 is a substantially horizontal surface. The partition wall 422 is erected vertically upward from the bottom surface 421. One of the grids 42 is a containing unit of the cell C. One or a plurality of the cells C are contained in one of the grids 42. The grid 42 not containing the cell C also occurs. Each of the grids 42 is treated as a picking unit of the cell C by the tip 15. When a bottom surface of the well 41 is a plane on which the grid 42 does not exist, each of the recognized cells C is set as a picking unit.

### [Example of assignment of cell information]

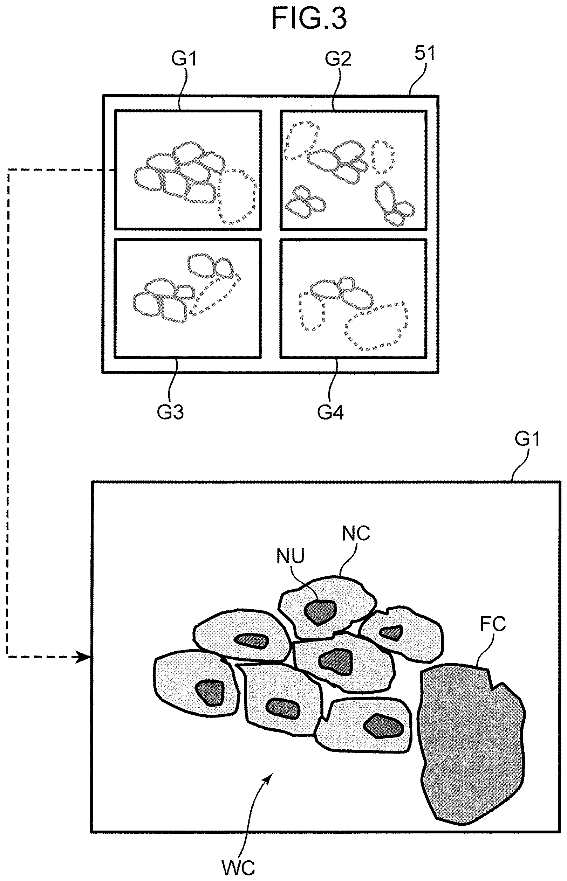

Next, an example of assignment of cell information will be described. Fig. 3 is a diagram illustrating an example of a plate image 51 (an image captured under irradiation with first illumination light). The plate image 51 is acquired as the camera 11 images the well plate 4 containing the cell C. The plate image 51 includes a plurality of grid images as cell containing portions. In the example of Fig. 3, the plate image 51 includes four grid images G1 to G4. Each of the grid images G1 to G4 corresponds to the grid 42 of the well 41 illustrated in Fig. 2. Note that the number of grid images acquired in one time of imaging varies depending on a visual field range of the camera 11.

Fig. 3 illustrates an enlarged view of one of the grid images G1. A whole cell WC is contained in the grid image G1. The whole cell WC is a cell group contained in one of the grids 42 as a cell containing unit, in other words, one of the grids 42 as a picking unit by the tip 15. The whole cell WC of the grid image G1 includes seven normal cells NC and one heterotypic cell FC.

The normal cell NC is a normal constituent cell of the whole cell WC. The heterotypic cell FC is a cell other than the normal cell NC, for example, a cell co-cultured in the same grid 42 as the normal cell NC. Each of the normal cells NC includes a cell nucleus NU. Since the cell nucleus NU is an internal element of the normal cell NC, the normal cell NC and the cell nucleus NU are treated as a parent-child relationship. Further, since the normal cell NC and the heterotypic cell FC are contained and cultured in the same grid 42, they are treated as a sibling relationship. Hereinafter, an example of assignment of cell information to the whole cell WC of the grid image G1 will be described. In the present embodiment, the normal cell NC can be observed in a bright field image acquired under irradiation with visible light, but it is assumed that the heterotypic cell FC and the cell nucleus NU are difficult to observe in a bright field image, and fluorescence imaging of performing fluorescent labeling by using a fluorescent labeling reagent or a fluorescent antibody is required.

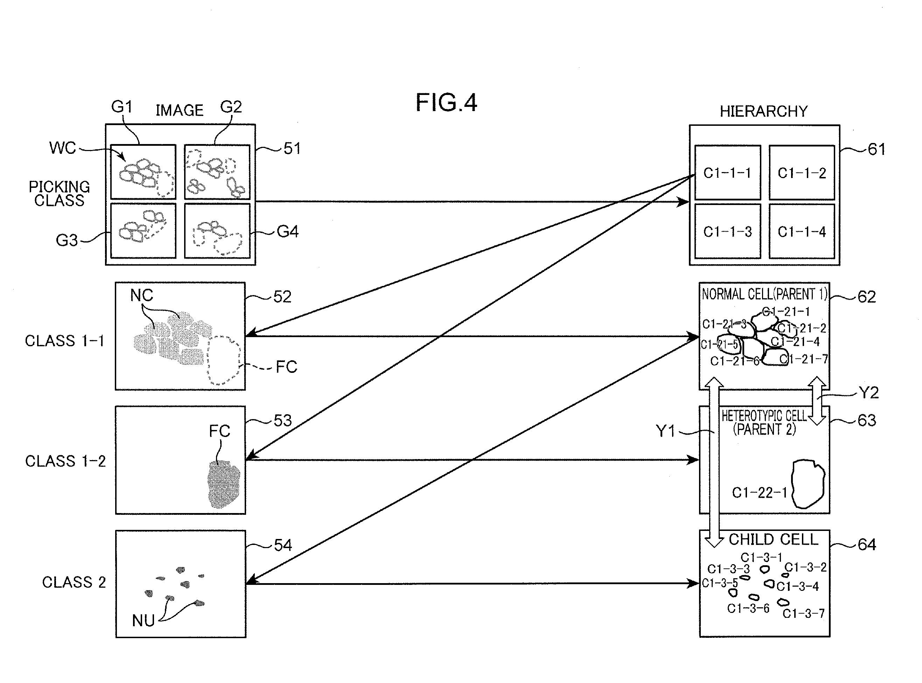

Fig. 4 is a diagram illustrating a relationship between a cell image (left side in Fig. 4) acquired for the grid 42 and a data hierarchy (right side in Fig. 4). The plate image 51 in the upper left of Fig. 4 corresponds to the plate image 51 illustrated in Fig. 3. When the plate image 51 is captured, the illumination control unit 24 (Fig. 1) causes the illumination device 12 to irradiate the well plate 4 with visible illumination light. The camera 11 acquires the grid images G1 to G4 which are images of the grid 42 included in the angle of view. The grid images G1 to G4 show a two-dimensional image of each of the whole cells WC. As described above, since one of the grids 42 is a picking unit of the tip 15, a hierarchy of the plate image 51 is treated as a picking class.

The grid images G1 to G4 captured by the camera 11 are stored in the image memory 31 of the processing device 3. The image processing unit 32 performs predetermined image processing on the grid images G1 to G4, and extracts the whole cells WC included in the grid images G1 to G4. The cooperation processing unit 33 assigns an identification code (one of the first identification codes) for recognizing the whole cell WC to the extracted whole cell WC. In the example of Fig. 4, as illustrated in a first recognition processing block 61 at the uppermost stage of a data hierarchy on the right side, identification codes C1-1-1, C1-1-2, C1-1-3, and C1-1-4 are assigned to the whole cells WC recognized in the grid images G1, G2, G3, and G4, respectively. These identification codes can also be said to be identification codes assigned to the grid 42 itself determined to include the whole cell WC by image processing. Data of the grid images G1 to G4 and the identification code C1-1-N are stored in the storage unit 34.

A normal cell image 52 of "Class 1-1" (image captured under irradiation with the first illumination light) is a recognition image of the normal cell NC included in the grid image G1, to which an identification code of "C1-1-1" is assigned in the first recognition processing block 61. The normal cell NC can be recognized in an image captured by the camera 11 under irradiation with visible illumination light (first illumination light). That is, the image processing unit 32 can identify a contour of the normal cell NC by performing image processing such as edge detection processing on the plate image 51 of a picking class. Here, an example in which seven of the normal cells NC are recognized in the normal cell image 52 is illustrated.

The cooperation processing unit 33 assigns an identification code (one of the first identification codes) for recognizing the extracted seven normal cells NC. In the example of Fig. 4, as shown in a second recognition processing block 62, identification codes C1-21-1, C1-21-2, C1-21-3, C1-21-4, C1-21-5, C1-21-6, and C1-21-7 are assigned to the seven normal cells NC. These normal cells NC are treated as first parent cells as one of constituent cells of the whole cell WC.

A heterotypic cell image 53 of "Class 1-2" (one of images captured under irradiation with second illumination light) is a recognition image of the heterotypic cell FC included in the grid image G1 with the identification code C1-1-1. When the heterotypic cell image 53 is captured, the heterotypic cell FC is fluorescently labeled and visualized. That is, a fluorescent labeling reagent or a fluorescent antibody that emits light by irradiation with light of a specific wavelength is caused to act on the heterotypic cell FC, and light of the specific wavelength is emitted as illumination light (second illumination light) from the excitation light source 121. The camera 11 captures an image of the heterotypic cell FC that fluoresces upon irradiation with the illumination light. The image processing unit 32 performs image processing of identifying a contour of the heterotypic cell FC.

The cooperation processing unit 33 assigns an identification code (one of the second identification codes) for recognizing the extracted heterotypic cell FC. Here, as shown in a third recognition processing block 63, an identification code C1-22-1 is assigned to one of the recognized heterotypic cells FC. The heterotypic cell FC is treated as a second parent cell as another constituent cell of the whole cell WC.

An internal element image 54 of "Class 2" (one of images captured under irradiation with the second illumination light) is a recognition image of the cell nucleus NU included as an internal element in the normal cell image 52. When the cell nucleus NU is imaged, the cell nucleus NU is fluorescently labeled and visualized. A fluorescent labeling reagent or a fluorescent antibody that emits light by irradiation with light of a specific wavelength different from that in the case of the heterotypic cell FC is caused to act on the cell nucleus NU, and light of the specific wavelength is emitted as illumination light (second illumination light) from the excitation light source 121. The camera 11 captures an image of the cell nucleus NU that fluoresces upon irradiation with the illumination light. The image processing unit 32 performs image processing of identifying a contour of the cell nucleus NU.

The cooperation processing unit 33 assigns an identification code (one of the second identification codes) for recognizing the extracted cell nucleus NU. Here, as shown in a fourth recognition processing block 64, identification codes C1-3-1, C1-3-2, C1-3-3, C1-3-4, C1-3-5, C1-3-6, and C1-3-7 are assigned to seven of the recognized cell nuclei NU. Since the cell nucleus NU exists in a contour region of the normal cell NC, the cell nucleus NU is treated as a child cell of the normal cell NC. That is, the normal cell NC of the second recognition processing block 62 and the cell nucleus NU of the fourth recognition processing block 64 have a parent-child relationship Y1. The normal cell NC and the heterotypic cell FC have a sibling relationship Y2.

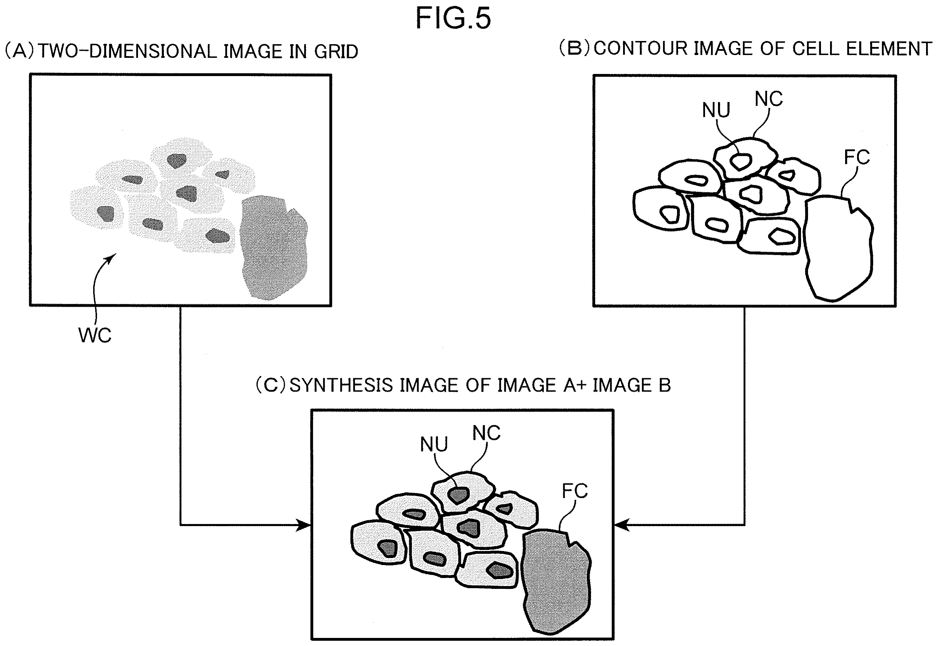

Fig. 5 is a diagram illustrating cell recognition processing in one of the grids 42. An image (A) of Fig. 5 is a two-dimensional image in the grid 42 acquired by bright field imaging of the grid 42, and corresponds to the plate image 51 of Fig. 4. In the image, the whole cell WC appearing with visible illumination light is observed. An image (B) of Fig. 5 is a contour image of the normal cell NC, the heterotypic cell FC, and the cell nucleus NU, which are acquired by image processing on the normal cell image 52, the heterotypic cell image 53, and the internal element image 54. An image (C) is a synthesis image of the image (A) and the image (B). Based on the image (C), a parent-child relationship and a sibling relationship, size information such as an area, a diameter, and an aspect ratio of each cell, a feature amount of a cell, such as contour data, an in-well position, fluorescence intensity, concentration, and circularity are extracted.

### [Database of cell list]

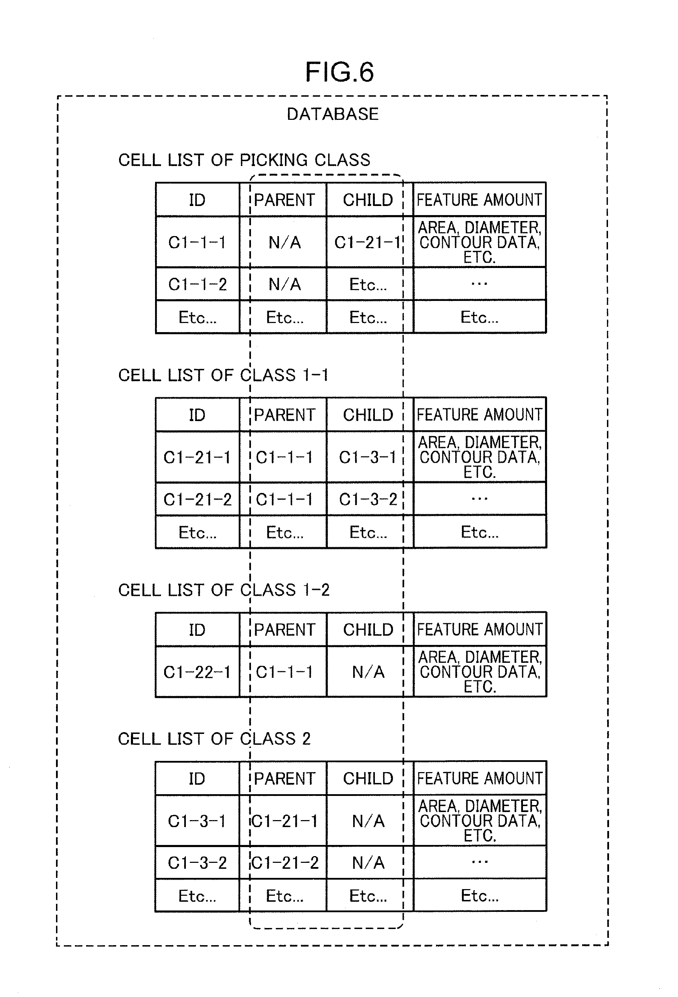

Fig. 6 is a diagram in a tabular form illustrating an example of a database including a cell list created for each class illustrated in Fig. 4. The database includes cell lists of the above picking class (first class), class 1-1 and class 1-2 (second class), and class 2 (third class). In the cell list of the picking class, the whole cell WC recognized in the grid images G1 to G4 or an identification code (ID) assigned to the grid 42 in which the whole cell WC exists is listed. Table data in which "parent", "child", and "feature amount" are associated with each ID is created. The table data is created by the cooperation processing unit 33 and stored in the storage unit 34.

A field of "parent" is an entry field of a cell corresponding to a parent of a cell of each identification code. Since cells of ID = C1-1-1 and so on which are the whole cell WC are highest parent cells, "N/A" indicating "not applicable" is entered in the field of "parent". The field of "child" is an entry field of a cell corresponding to a child of a cell of each identification code. In the field of "child" of ID = C1-1-1, an identification code C1-21-1 assigned to the normal cell NC, which is one of constituent cells, is entered. Although description is omitted, in the example of Fig. 4, the identification codes C1-21-2 to C1-21-7 are also entered in the field of "child". In the field of "feature amount", feature data obtained by quantifying a feature of a cell, such as the area, diameter, and contour data of a cell described above, is described.

In the cell list of Class 1-1, identification codes (IDs) assigned to the recognized normal cells NC are listed. Similarly, table data in which "parent", "child", and "feature amount" are associated with each ID is created. For example, in the field of "parent" of ID = C1-21-1, C1-1-1 which is the ID of the whole cell WC to which the cell belongs is entered. In the field of "child" of ID = C1-21-1, an identification code C1-3-1 of the cell nucleus NU which is an internal element of the normal cell NC with C1-21-1 is entered. In the field of "feature amount", feature data on the normal cell NC of C1-21-1 is described.

In the cell list of Class 1-2, identification codes (IDs) assigned to the recognized heterotypic cells FC are listed. Further, table data in which "parent", "child", and "feature amount" are associated with the listed IDs is created. In the field of "parent" of ID = C1-22-1, C1-1-1 which is the ID of the whole cell WC to which the cell belongs is entered. A cell corresponding to a child of the heterotypic cell FC is not recognized in the present embodiment. For this reason, "N/A" is entered in the field of "child" of ID = C1-22-1. In the field of "feature amount", feature data on the heterotypic cells FC of C1-22-1 are described.

In the cell list of Class 2, identification codes (IDs) assigned to the recognized cell nuclei NU are listed. Table data in which "parent", "child", and "feature amount" are associated with each ID is created. For example, in the field of "parent" of ID = C1-3-1, C1-21-1 which is the ID of the normal cell NC to which the cell belongs is entered. A cell and the like as internal elements of the cell nucleus NU are not recognized in the present embodiment. For this reason, "N/A" is entered in the field of "child" of ID = C1-3-1. In the field of "feature amount", feature data on the cell nucleus NU of C1-3-1 is described.

By creation of the cell list shown in the database of Fig. 6, the whole cell WC, the normal cell NC, the cell nucleus NU, and the heterotypic cell FC can be identified by identification codes, and can be associated with each other. In a cell list of each class, by tabulating a relationship between IDs of listed cells and identification codes of "parent" and "child", connection between the cells becomes clear. That is, the fields of "parent" and "child" in each cell list are cooperation information for associating constituent cells of the whole cell WC. By storing a database including such cooperation information in the storage unit 34, it is possible to easily grasp cell information such as a parent-child relationship or a sibling relationship of cells to which specific IDs are assigned in processing or the like at the time of selection of a target cell.

### [Display example of cell information]

Fig. 7 is a diagram illustrating a display example of cell information on the monitor 13 by the display control unit 21. A display image 13A of Fig. 7 includes a class structure for one picking class. That is, in the display image 13A, the whole cell WC in one of the grids 42 and a cell element constituting the whole cell WC are listed in a hierarchical form. The hierarchy includes the picking class, Class 1, and Class 2 illustrated in the database of Fig. 6. The display control unit 21 accesses the database in the storage unit 34, creates the display image 13A, and displays the display image 13A on the monitor 13.

In the field of the picking class, information regarding the whole cell WC is displayed. In the field of Class 1, information regarding the normal cell NC and the heterotypic cell FC, which are constituent cells of the whole cell WC, is displayed. Information regarding the cell nucleus NU is displayed in the field of Class 2. That is, classification is performed in a manner that the whole cell WC is set to a first class, the normal cell NC and the heterotypic cell FC, which are cell elements constituting the whole cell WC, are set to a second class on a lower layer of the first class, and the cell nucleus NU, which is an internal element of the normal cell NC, is set to a third class on a lower layer of the second class.

By visually recognizing the display image 13A, the user can grasp information regarding each of cell elements constituting the whole cell WC and information indicating a generation relationship between the whole cell WC and the cell elements for the whole cell WC contained in one of the grids 42 as a picking unit. That is, the user can check, on the monitor 13, a generation hierarchy from the whole cell WC as a starting point. Further, the user can focus on one cell nucleus NU and trace, on the monitor 13, the normal cell NC that is a parent of the one cell nucleus NU and the whole cell WC to which the normal cell NC belongs.

Fig. 8 is a diagram illustrating another display example of cell information on the monitor 13 by the display control unit 21. A display image 13B of Fig. 8 is an example in which cell information of each of a picking class, Class 1, and Class 2 is displayed on the monitor in the form of a list. In the field of the picking class, an ID of the whole cell WC, an image of the whole cell WC, and a feature amount are displayed. In the field of Class 1, a type, an ID, and a feature amount of a constituent cell of the whole cell WC are displayed for each ID of the whole cell WC of the picking class. In the field of Class 2, a type, an ID, and a feature amount of an internal element of a constituent cell of Class 1 are displayed.

Specifically, in the picking class of the display image 13B, an image and a feature amount of the whole cell WC to which ID = C1-1-1 is assigned are displayed. In the type field of Class 1, the normal cell NC and the heterotypic cell FC which are constituent cells of the whole cell WC of ID = C1-1-1 are displayed. In the ID fields corresponding to the normal cells NC, C1-21-1 to C1-21-7, which are IDs of the normal cells NC, are entered. In the ID field corresponding to the heterotypic cell FC, C1-22-1, which is an ID of the heterotypic cell FC, is entered. In the field of a feature amount, feature data for the normal cell NC and the heterotypic cell FC is described in association with each ID.

In the type field of Class 2, description indicating that a child cell is the cell nucleus NU of the normal cell NC is displayed. N/A is entered for the heterotypic cell FC for which no child cell is recognized. In the ID field, C1-3-1 to C1-3-7, which are IDs of the cell nuclei NU, are entered. In the field of a feature amount, feature data on the cell nucleus NU is described in association with each ID.

The display image 13B can be said to be display in which generation relationships incorporating a parent-child relationship and a sibling relationship can be listed for each of the whole cells WC. Therefore, the user can easily grasp not only structural information of each cell but also a generation relationship viewed from the whole cell WC, a generation relationship viewed from the normal cell NC or the cell nucleus NU, a relationship with the heterotypic cell FC, and the like by visually recognizing the display image 13B. For this reason, there is an advantage that, when selecting a target cell to be picked, the user can refer to more cell information and it becomes easy to select an intended target cell.

### [Processing flow]

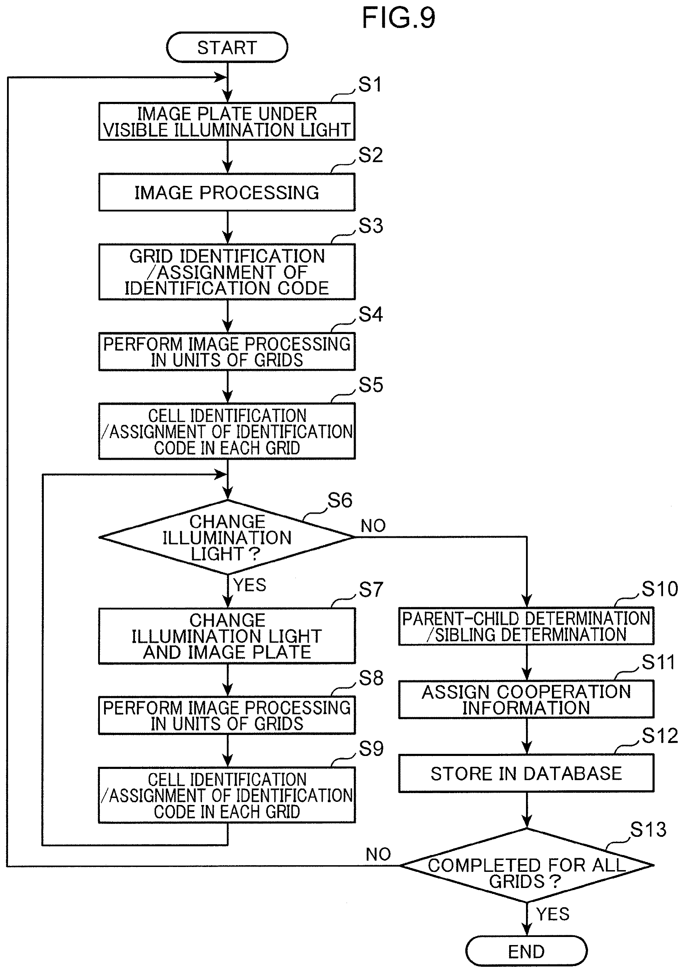

Fig. 9 is a flowchart illustrating an example of processing of assigning cooperation information to a cell in a grid, which is executed by the cell picking apparatus 1. As a premise of start of the processing, it is assumed that the camera 11 and the illumination device 12 are positioned and moved with respect to the well 41 of the well plate 4 containing the cell C by the axis control unit 23, and the grid 42 of the well 41 is in a state of being able to be imaged. As an example of a processing target, an example of assignment of cell information illustrated in Fig. 4 is referred to.

First, the controller 2 causes the camera 11 to image the well plate 4 under illumination of visible light (Step S1). The illumination control unit 24 of the imaging control unit 22 causes the illumination device 12 to generate visible illumination light. The camera control unit 25 transmits a trigger signal to the camera 11 at a predetermined timing, sets an exposure amount or the like to a predetermined value, and causes the camera 11 to perform imaging. An image captured in Step S1 is, for example, as illustrated in Fig. 4, the plate image 51 including the grid image G1, that is, an image of a picking class. Image data acquired by the camera 11 is sent to the image memory 31 of the processing device 3 and stored.

The image processing unit 32 accesses the image memory 31 and performs predetermined image processing on image data of the plate image 51 (Step S2). By the image processing, the grid 42 of the well 41 and the whole cell WC in the grid 42 are identified. The cooperation processing unit 33 executes assignment processing of assigning an identification code for recognition to the identified grid 42 or whole cell WC (Step S3). In the example of Fig. 4, the identification code is ID = C1-1-1 of the picking class, and the like. The identification code is stored in the storage unit 34 in association with the plate image 51.

Subsequently, the image processing unit 32 executes image processing in units of the grid 42 based on the previous plate image 51 (Step S4). The image processing unit 32 performs image processing for recognizing the normal cell NC from an image of the whole cell WC to which ID = C1-1-1 is assigned, for example. The normal cell image 52 is generated by the image processing. The cooperation processing unit 33 executes assignment processing of assigning an identification code to each of the recognized normal cells NC (Step S5). In the example of Fig. 4, the assigned identification codes are ID = C1-21-1 to C1-21-7 of Class 1-1.

Next, the controller 2 determines whether or not a command to change illumination light and perform imaging is given (Step S6). When an instruction to change illumination light exists (YES in Step S6), the illumination control unit 24 causes the illumination device 12 to generate illumination light different from visible light. The illumination light selected here is, for example, illumination light for fluorescence imaging with which the heterotypic cell FC can fluoresce. The camera control unit 25 causes the camera 11 to image the well plate 4 irradiated with the illumination light for fluorescence imaging (Step S7).

The image processing unit 32 performs image processing of recognizing the heterotypic cell FC in the grid of ID = C1-1-1 on the image data acquired in Step S7 (Step S8). The heterotypic cell image 53 is generated by the image processing. The cooperation processing unit 33 assigns an identification code to the recognized heterotypic cell FC (Step S9). In the example of Fig. 4, the assigned identification code is ID = C1-22-1 of Class 1-2.

After the above, the processing returns to Step S6, and it is determined whether or not a command to perform separate imaging by further changing illumination light is given. In the example of Fig. 4, in order to recognize the cell nucleus NU of Class 2, it is necessary to perform imaging by changing illumination light. In this case, Steps S7 to S9 are repeated to generate the internal element image 54, and an identification code is assigned to the recognized cell nucleus NU. Identification codes to be assigned are IDs = C1-3-1 to C1-3-7 of Class 2.

On the other hand, in a case where there is no instruction to change illumination light (NO in Step S6), the cooperation processing unit 33 determines a parent-child relationship and a sibling relationship between cells based on the normal cell image 52, the heterotypic cell image 53, and the internal element image 54 (Step S10). In the example of Fig. 4, the cell nucleus NU in a contour region of the normal cell NC is determined to be a child cell of the normal cell NC. The heterotypic cell FC that exists separately from the normal cell NC is determined to be a sibling cell.

Based on a determination result of Step S10, the cooperation processing unit 33 assigns cooperation information for associating identified cells with each other (Step S11). For example, as in the cell list illustrated in Fig. 6, table data indicating connection of cells between classes by an identification code is the cooperation information. Created table data and the like are stored in a database of the storage unit 34 (Step S12). After the above, the controller 2 determines whether or not processing for all the grids 42 is completed (Step S13). In a case where the unprocessed grid 42 exists (NO in Step S13), the controller 2 returns to Step S1 and repeats the processing. In a case where there is no unprocessed grid 42 (YES in Step S13), the controller 2 ends the processing.

In the above processing flow, an example in which imaging with one beam of illumination light (for example, Step S1) and image processing (for example, Step S2) on acquired image data are performed as a set is shown. Alternatively, an imaging step and an image processing step may be separately executed. In the imaging step, bright field imaging and fluorescence imaging are sequentially executed while illumination light is sequentially changed, and acquired image data is stored in the storage unit 34. In the image processing step, image processing in units of grids, processing of cell identification and assignment of an identification code, assignment of cooperation information, and storage in a database, and the like are performed based on image data acquired in each imaging operation.

The embodiment described above includes an invention shown below.

A cell recognition apparatus according to one aspect of the present invention includes: a cell containing portion capable of containing a cell; an imaging unit configured to image the cell containing portion; and a recognition processing unit configured to recognize a cell in the cell containing portion based on an image acquired by the imaging unit, and the recognition processing unit performs processing of assigning a first identification code for recognizing a whole cell contained in the cell containing portion, a second identification code for recognizing a cell element included in the whole cell, and cooperation information that associates the first identification code with the second identification code.

According to this aspect, the first identification code is assigned to a whole cell, and the second identification code is assigned to a cell element constituting the whole cell. For this reason, the whole cell and the cell element can be individually recognized and managed. Further, the first identification code and the second identification code are associated with each other by the cooperation information. Therefore, analysis of a feature amount and the like can be performed by designating a relationship between the whole cell and the cell element. As described above, it is possible to perform analysis of a cell with high information density.

The above cell recognition apparatus desirably further includes an illumination unit capable of irradiating the cell containing portion with a plurality of types of illumination light, and the recognition processing unit desirably performs processing of assigning the first identification code based on an image acquired by the imaging unit by causing the illumination unit to emit first illumination light, and performs processing of assigning the second identification code based on an image acquired by the imaging unit by causing the illumination unit to emit the first illumination light or second illumination light different from the first illumination light.

According to this aspect, an image is acquired for each of a whole cell and a cell element by selectively using illumination light used for imaging. Therefore, the whole cell and the cell element can be easily recognized on images.

In the above cell recognition apparatus, in a case where the cell elements include a normal constituent cell of the whole cell and a heterotypic cell other than the normal constituent cell, the recognition processing unit may recognize the normal constituent cell based on an image captured under irradiation with the first illumination light, and recognize the heterotypic cell based on an image captured under irradiation with the second illumination light.

Cell elements constituting a whole cell may include a heterotypic cell that grows in the same cell containing unit as a normal constituent cell and has a sibling relationship. According to the above aspect, by selectively using illumination light for imaging of a normal constituent cell and imaging of a heterotypic cell, the normal constituent cell and the heterotypic cell can be easily recognized from an obtained image.

In the above cell recognition apparatus, in a case where the cell elements include a constituent cell of the whole cell and an internal element of the constituent cell, the recognition processing unit may recognize the constituent cell based on an image captured under irradiation with the first illumination light, and recognize the internal element based on an image captured under irradiation with the second illumination light.

According to this aspect, by selectively using illumination light for imaging of a constituent cell and imaging of an internal element of the constituent cell such as a cell nucleus, the constituent cell and the internal element can be easily recognized from obtained images.

The above cell recognition apparatus desirably further includes: a display unit configured to display information regarding a cell to be recognized; and a display control unit configured to control a display operation on the display unit, and the display control unit desirably causes the display unit to display information regarding the whole cell and the cell element and information indicating a relationship between the whole cell and the cell element based on the cooperation information based on information assigned by the recognition processing unit.

According to this aspect, the user can grasp information regarding each of a whole cell and a cell element and information indicating a relationship between the whole cell and the cell element by visually recognizing the display unit.

In the above cell recognition apparatus, the display control unit desirably performs classification in which the whole cell is set to a first class, the cell element is set to a second class on a lower layer of the first class, and an internal element of the cell element is set to a third class on a lower layer of the second class, and causes the display unit to display the information in a manner that the classification can be identified.

According to this aspect, the user can check a generation hierarchy starting from a whole cell on the display unit. For example, it is possible to trace, on the display unit, one internal element, a cell element including the one internal element, and a whole cell that is a parent of the cell element.

According to the present invention, it is possible to provide a cell recognition apparatus that enables analysis of a cell with high information density.

This application is based on Japanese Patent application No. 2025-12185 filed in Japan Patent Office on January 28, 2025, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A cell recognition apparatus (1) comprising:
a cell containing portion (4) capable of containing a cell (C);
an imaging unit (11) configured to image the cell containing portion (4); and
a recognition processing unit (3) configured to recognize a cell (C) in the cell containing portion (4) based on an image acquired by the imaging unit (11), wherein
the recognition processing unit (3) performs processing of assigning a first identification code for recognizing a whole cell (WC) contained in the cell containing portion (4), a second identification code for recognizing a cell element (NC,NU,FC) included in the whole cell (WC), and cooperation information that associates the first identification code with the second identification code.

2. The cell recognition apparatus (1) according to claim 1, further comprising an illumination unit (12) capable of irradiating the cell containing portion (4) with a plurality of types of illumination light, wherein
the recognition processing unit (3)
performs processing of assigning the first identification code based on an image acquired by the imaging unit (11) by causing the illumination unit (12) to emit first illumination light, and
performs processing of assigning the second identification code based on an image acquired by the imaging unit (11) by causing the illumination unit (12) to emit the first illumination light or second illumination light different from the first illumination light.

3. The cell recognition apparatus (1) according to claim 2, wherein
in a case where the cell elements include a normal constituent cell (NC) of the whole cell (WC) and a heterotypic cell (FC) other than the normal constituent cell (NC),
the recognition processing unit (3) recognizes the normal constituent cell (NC) based on an image captured under irradiation with the first illumination light, and recognizes the heterotypic cell (FC) based on an image captured under irradiation with the second illumination light.

4. The cell recognition apparatus (1) according to claim 2, wherein
in a case where the cell elements include a constituent cell (NC) of the whole cell (WC) and an internal element (NU) of the constituent cell (NC),
the recognition processing unit (3) recognizes the constituent cell (NC) based on an image captured under irradiation with the first illumination light, and recognizes the internal element (NU) based on an image captured under irradiation with the second illumination light.

5. The cell recognition apparatus (1) according to any one of claims 1 to 4, further comprising:
a display unit (13) configured to display information regarding a cell (C) to be recognized; and
a display control unit (21) configured to control a display operation on the display unit (13), wherein
the display control unit (21) causes the display unit (13) to display information regarding the whole cell (WC) and the cell element (NC,NU,FC) and information indicating a relationship between the whole cell (WC) and the cell element (NC,NU,FC) based on the cooperation information based on information assigned by the recognition processing unit (3).

6. The cell recognition apparatus according to claim 5, wherein the display control unit (21) performs classification in which the whole cell (WC) is set to a first class, the cell element (NC,FC)is set to a second class on a lower layer of the first class, and an internal element (NU) of the cell element is set to a third class on a lower layer of the second class, and causes the display unit (13) to display the information in a manner that the classification can be identified.
